# EUROPEAN PATENT APPLICATION

(11) **EP 0 540 890 A1**
(43) Date of publication of application: **12.05.1993**
(21) Application number: 92117142.7
(22) Date of filing: 08.10.1992
(51) Int. Cl.: C08G 69/26

(54) **Copolyamides of terephthalic acid, hexamethylene diamine and 2-methyl pentamethylene diamine**

(30) Priority: 10.10.1991 US 777834
(71) Applicant: HOECHST CELANESE CORPORATION, Somerville, N.J. 08876 (US)
(72) Inventor: Choe, Eui W., Randolph, New Jersey (US); LaNieve III, H. Leslie, Warren, New Jersey (US); Foreman, Larry C., Summit, New Jersey (US)
(74) Representative: von Kreisler, Alek, Dipl.-Chem.

(57) **Abstract**

The present invention relates generally to partially aromatic copolyamides formed from hexamethylene diamine, a substituted aliphatic diamine and terephthalic acid.

## Description

### TECHNICAL FIELD

The present case relates generally to polyamides and more specifically to melt-processable polymers of terephthalic acid or its derivatives, hexamethylene diamine and 2-methyl-pentamethylene diamine.

### BACKGROUND ART

Partially aromatic nylons exhibiting semi-crystalline morphology are well-known to those of skill in the art to be useful for performance filaments and yarns such as those useful for tires. Japanese published specification 44-19551 of Okazaki, for example teaches polymers of terephthalic acid and 2-methyl-pentamethylene diamine by melt polymerization.

Poly (2-methyl-pentamethylene terephthalamide) (hereafter sometimes referred to as "M5T") exhibits a glass transition temperature of about 143°C and crystalline melting temperature of about 275°C. These melt characteristics, together with outstanding physical properties and chemical resistance make M5T particularly economically attractive since it may be melt processed in conventional equipment below temperatures at which thermal degradation becomes a serious problem.

On the other hand, other partially aromatic, partially crystalline nylons while exhibiting excellent properties, are not readily melt-processable because their melting points are simply too high. For example, polymers of terephthalic acid and hexamethylene diamine ("nylon 6T") have a glass transition temperature of about 140°C and a crystalline melting point of about 375°C. The high crystalline melting point makes it impossible to readily melt process the polymer due to thermal degradation which occurs readily at about 340°C and such polymers are typically made by interfacial or solution polymerization. See, e.g. Kirk-Othmer Encycolopedia of Chemical Technology, Volume 18, pp. 364-365 Wiley (1982). One way to overcome the above drawback is to copolymerize other monomers with terephthalic acid and hexamethylene diamine; however, such polymers frequently exhibit a eutectic or are wholly amorphous and not suitable for high-temperature use. See for example, Kirk-Othmer, supra at 348 and U.S.P. 3,294,758 to Gabler et al.

### SUMMARY OF THE INVENTION

It has been found that the novel copolyamides of the present invention offer resistance to high temperatures as well as melt-processability at or below 330° C. The unexpected properties are achieved by providing polymers of terephthalic acid (or its derivatives such as acid chlorides or diphenyl esters thereof) with a mixture of diamines consisting essentially of hexamethylene diamine and a sidechain alkylated diprimary diamine. In general these polymers have the recurring units: 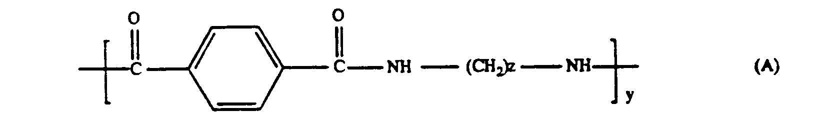
and 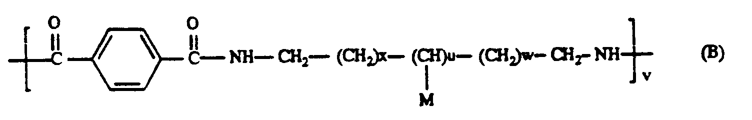
where y + v total at least about 10, x and w can be the same or different and are integers from 0 to about 10, z=6, u is an integer from about 1 to 3 and M is an aliphatic sidechain having from 1-3 carbon atoms. The sidechain alkylated diamine is preferably 2-methyl-pentamethylene diamine but the polymers may be made from other aklylated primary straight chain aliphatic diamines such as 2-methyl-hexamethylene diamine or 3-methyl-hexamethylene diamine or ethylated homologs.

The diprimary sidechain alkylated diamines are present in an amount of from about 35 to about 75 mole percent based on the amount of diamine, the balance of from about 65 to about 25 mole percent of the diamine being hexamethylene diamine.

Other monomers such as isophthalic acid, 1,6 naphthoic diacid, ethylene diamine or other like reactants may be added in minor amounts if so desired so long as the resulting polymer is at least partially crystalline, that is has an enthalpy of crystallization of at least 10 joules per gram, exhibits a glass transition temperature of at least about 130°C, and has a crystalline melting point of no more than about 330°C so that it is melt processable. In preferred embodiments, the copolymers of the present invention have an enthalpy of crystallization of at least about 25 joules per gram, and a crystalline melting point of from about 280°C to about 295°C, and a glass transition temperature of from about 140 to about 160°C. The molecular weight may be as desired; however, inherent viscosities of about 0.75 to about 1.5 are preferred.

### DETAILED DESCRIPTION

The invention is described in detail below in connection with numerous examples which are provided for purposes of illustration only and not by way of limitation. The present invention is defined with particularity in the appended claims.

The novel copolymers may be prepared in a variety of ways as will be appreciated by one of skill in the art, inasmuch as it is well known that nylons such as those of the present invention may be made by way of catalyzed or uncatalyzed melt or solution polymerization processes using either nylon salts or terephthalic acid/diamine mixtures directly.

### EXAMPLE 1

In a 4 liter Waring blender were placed 12.62 grams (0.1088 moles) of 2-methylpentamethylenediamine, 4.42 grams of magnesium oxide, 660 ml. of distilled water and 440 ml. of xylene. The mixture was stirred for two minutes at 10,000 rpm. A solution of 22.09 grams (0.1088 moles) of terephthaloyl dichloride in 220 ml. of xylene was added slowly into the mixture with agitation over one minute. The resulting reaction mixture was stirred for five minutes. The resulting polymer was filtered, washed twice with methanol, and dried at 100 degrees Celsius for 16 hours and finally at 80 degrees Celsius in vacuum for 16 hours to obtain 27.3 grams of high molecular weight poly(2-methylpentamethylene terephthalamide) with inherent viscosity of 1.44 dl/g as determined at 25 degrees Celsius and 0.4% concentration in 97.5 % sulfuric acid; m.p. 276 Celsius; glass transition temperature 143 degrees Celsius; melt index 60 dg/minute at 300 degrees Celsius.

The polyamide was melt-spun into fibers at 307 degrees Celsius at a take-up speed of 2500 meter per minute. The fiber properties as spun exhibited 1 gpd - 1.8 gpd tensile strength, 54 percent elongation and 33 gpd modulus. Drawn yarn at a 5.8:1 draw ratio over hot shoes at 157 and 170°C exhibited properties of 6.8 gpd tensile strength, 10.3% elongation, and 70 gpd modulus.

### EXAMPLE 2

This example illustrates the preparation of copoly(2-methyl-pentamethylene-1,6-hexamethylene terephthalamide) at a 50:50 mole ratio. Following the procedure of Example I, the mixture of 2-methylpentamethylenediamine (6.31 grams, 0.054 moles) and 1,6-hexamethylenediamine (6.31 grams, 0.054 moles) was used instead of 2-methylpentamethylenediamine to obtain 20.3 grams of high molecular weight copoly(2-methylpentamethylene 1,6-hexamethylene terephthalamide) at a mole ratio of 50:50 with inherent viscosity of 1.35 dl/g as determined at 25 degrees Celsius and 0.4% concentration in 97.5 % sulfuric acid; m.p. 295 Celsius; glass transition temperature 151 degrees Celsius; melt index 32 dg/minute at 340 degrees Celsius.

### EXAMPLE 3

This example illustrates the preparation of copoly(2-methyl-pentamethylene-1,6-hexamethylene terephthalamide) at a 35:65 mole ratio. Following the procedure of Example I, the mixture of 2-methylpentamethylenediamine (4.417 grams, 0.038 moles) and 1,6-hexamethylenediamine (8.20 grams, 0.0707 moles) was used instead of 2-methylpentamethylenediamine to obtain 20.3 grams of high molecular weight copoly(2-methylpentamethylene-1,6-hexamethylene terephthalamide) at mole ratio of 35:65 with inherent viscosity of 1.52 dl/g as determined at 25 degrees Celsius and 0.4% concentration in 97.5% sulfuric acid; m.p. 323 degrees Celsius; glass transition temperature 158 degrees Celsius.

### EXAMPLE 4

This example illustrates the preparation of copoly(2-methylpentamethylene-1,6-hexamethylene terephthalamide) at 27:75 mole ratio. Following the procedure of Example I, the mixture of 2-methylpentamethylenediamine (3.155 grams, 0.027 moles) and 1,6-hexamethylenediamine (9.46 grams, 0.0816 moles) was used instead of 2-methylpentamethylenediamine to obtain 23.2 grams of high molecular weight copoly(2-methylpentamethylene 1,6-hexamethylene terephthalamide) at mole ratio of 25:75 with inherent viscosity of 1.35 dl/g as determined at 25 degrees and 0.4% concentration in 97.5% sulfuric acid; m.p. 342 degrees Celsius; glass transition temperature 161 degrees Celsius; melt index 32 dg/min. at 345 degrees Celsius.

### EXAMPLES 5-12

As in examples I-IV generally, additional samples were prepared by solid state polymerization (Method A), interfacial polymerization (Method B) and melt polymerization method (C).

Method A, solid state polymerization, included the polymerization reaction of a diacid with an equimolar amount of a diamine, or dibasic acid diamine salt, at an elevated temperature below the melting point of the resulting polymer and in a closed reactor under a high pressure (100-1200 psi). Water is then removed by releasing the autogeneous pressure to form the polyamide.

Method B, interfacial condensation (room temperature), included the rapid reaction of an acid dihalide with a diamine to form a very high molecular weight polymer if carried out at the interface between two liquid phases, each containing one of the reactants. Typically, an aqueous phase containing the diamine and an acid acceptor such as magnesium oxide or calcium oxide, is layered at room temperature over an organic phase containing the acid dichloride.

Method C, melt polymerization, included the direct melt- polymerization reaction of a dibasic acid and a diamine, or dibasic acid diamine salt to form a polyamide, by heating the reactants together at an elevated temperature above the melting point of the resulting polymer, and removing water, usually by applying vacuum in the later stage.

Mole ratios and results are given in Table I below for polyamides and copolyamides having various mole ratios of hexamethylene diamine terephthalamide ("6T") units to 2-methyl-pentamethylene diamine terephthalamide ("5T") units where Tm, the crystalline melting point and Tg, the second order glass transition temperature were measured using a duPont differential scanning calorimeter (DSC) model 910 connected to a model 9900 computer, while Tc, the crystallization point from the melt upon cooling was measured by using the same equipment by cooling the melted sample at a controlled cooling rate of 10°C per minute.

Heats of crystallization ΔH_{f} (joules per gram) of the first and second heatings were measured by utilizing a Dupont DSC910 connected to a 9900 computer at a heating rate of 20°K per minute.

**TABLE 1**

| **PHYSICAL PROPERTIES OF COPOLYAMIDES** | | | | | | | | | | |
|---|---|---|---|---|---|---|---|---|---|---|
| Example | Mole Ratio 6-T/M5-T | Method | I.V. dl/g | Tm 1ST Heating °C | Tc CRYST °C | Tm 2ND Heating °C | Td °C | Tg °C | ΔHG 1st J/g | ΔHf 2nd J/g |
| 5 | 100/0 (Pilot Scale) | A | 1.94 | 374 | | 360 | | 142 | 132 | 82 |
| 6 | 100/0 | B | 1.14 | 379 | 332 | 365 | 440 | 133 | 93 | 68 |
| 7 | 75/25 | B | 1.35 | 342 | 296 | 337 | | 161 | 36 | 69 |
| 8 | 65/35 | B | 1.54 | 323 | 270 | 302 | 438 | 158 | 24 | 35 |
| 9 | 50/50 | B,C | 1.35 | 295 | 238 | 289 | | 151 | 15 | 27 |
| 10 | 35/65 | C | 1.85 | 282 | | 277 | 400 | 148 | 11 | 22 |
| 11 | 25/75 | C | 1.06 | 278 | | 262 | 400 | 145 | 29 | 12 |
| 12 | 0/100 | B,C | 1.44 | 276 | 231 | 276 | | 143 | 39 | 45 |
| I.V. was determined at 0.4% in 97.5% sulfuric acid at 25 degrees Celsius. Td = temperature at 10% weight loss in nitrogen. M5-T = 2-methylpentamethylene terephthalamide 6-T = Hexamethylene terephthalamide A = Solid state polymerization B = Interfacial polymerization C = Melt polymerization | | | | | | | | | | |

While the present invention has been described in detail and exemplified by numerous embodiments, various modifications will be apparent to those of skill in the art. For example, minor amounts of additional comonomers could be added without departing from the spirit and scope of the present invention.

## Claims

1. A melt-processable partially crystalline copolyamide consisting essentially of recurring moieties I and II where: I is 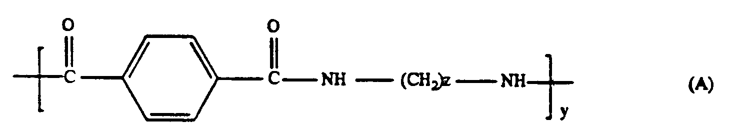 and II is 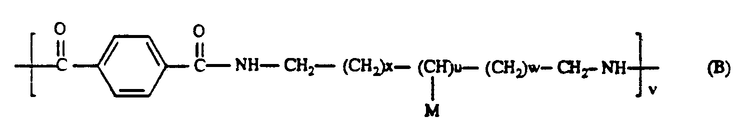 wherein y + v are integers totalling at least 10, x and w are integers which may be the same or different and are integers from about 0 to about 10, z=6, M is an aliphatic side chain having from 1-6 carbon atoms and u is an integer from 1 to 3 and wherein said copolyamide exhibits a crystalline melting point of less than about 330°C, an enthalpy of crystallization of at least 10 joules per gram and a glass transition temperature of at least 130° Celsius.

2. The copolyamide according to claim 1, wherein moiety II is present in an amount from about 35 to about 75 mole percent.

3. The copolyamide according to claim 1, wherein moiety I is present in an amount of from about 65 to about 25 mole percent.

4. The copolyamide according to claim 1, wherein moiety II includes the residue of 2-methyl-pentamethylene diamine.

5. The copolyamide according to claim 1, wherein moiety II includes the residue of 2-methyl-hexamethylene diamine.

6. The copolyamide according to claim 1, wherein moiety II includes the residue of 3-methyl-hexamethylene diamine.

7. The copolyamide according to claim 1, wherein the polymer has an inherent viscosity of from about 0.75 to about 1.5 dl/g as measured at 25°C and 0.4% concentration in 97.5% sulfuric acid.

8. The copolyamide according to claim 1, wherein the polymer has an enthalpy of crystallization of at least about 25 joules per gram.

9. The copolyamide according to claim 1, wherein the polymer exhibits a glass transition temperature of from about 140 to about 160°C and a crystalline melting point of from about 280 to about 295°C.

10. A fiber formed from the copolyamide of claim 1.

11. A melt-processable partially crystalline copolyamide of terephthalic acid or its derivatives, hexamethylene diamine and 2-methyl-pentamethylene diamine wherein said copolyamide contains from about 65 to about 25 mole percent based on the amount of diamine of the residue of hexamethylene diamine and from about 35 to about 75 mole percent of the residue of 2-pentamethylene diamine.

12. The copolyamide according to claim 11, wherein the polymer has an inherent viscosity of from about 0.75 to about 1.5 dl/g as measured at 25 °C and 0.4% concentration in 97.5% sulfuric acid.

13. The copolyamide according to claim 11, wherein the polymer has an enthalpy of crystallization of at least about 25 joules per gram.

14. The copolyamide according to claim 11, wherein the polymer exhibits a glass transition temperature of from about 140 to about 160°C and a crystalline melting point of from about 280 to about 295°C.

15. A fiber formed from the copolyamide of claim 11.
